# EUROPÄISCHE PATENTANMELDUNG

(11) **EP 3 715 047 A2**
(43) Veröffentlichungstag der Anmeldung: **30.09.2020**
(21) Anmeldenummer: 20000045.3
(22) Anmeldetag: 29.01.2020
(51) Int. Cl.: B23Q 3/155

(54) **ANORDNUNG ZUR BEARBEITUNG VON WERKSTÜCKEN**

(30) Priorität: 25.03.2019 CH 3832019
(71) Anmelder: Erowa AG, 5734 Reinach (CH)
(72) Erfinder: HEDIGER, Hans, 5734 Reinach (CH)
(74) Vertreter: Hering, Hartmut

(57) **Zusammenfassung**

Die Anordnung (17) zur Bearbeitung von Werkstücken umfasst zumindest eine Bearbeitungsmaschine (18), einen der jeweiligen Bearbeitungsmaschine (18) zugeordneten Maschinenspeicher (21) zur Aufnahme von Bearbeitungswerkzeugen sowie einen auf einem fahrerlosen Untersatz (1) angeordneten Roboter (2). Mit dem fahrerlosen Untersatz (1) können Bearbeitungswerkzeuge dem Maschinenspeicher (21) zugeführt und auch wieder daraus entnommen werden. Der fahrerlose Untersatz (1) ist zudem mit einem Zwischenspeicher (5) zur Aufnahme von Bearbeitungswerkzeugen versehen. Eine derartige Anordnung (17) benötigt vergleichsweise wenig Platz, ist flexibel ausbaubar und kann über längere Zeit autonom betrieben werden.

## Beschreibung

### Technisches Gebiet

Die Erfindung betrifft eine Anordnung zur Bearbeitung von Werkstücken nach dem Oberbegriff des Anspruchs 1, einen fahrerlosen Untersatz für eine solche Anordnung gemäss dem Oberbegriff des Anspruchs 13 sowie ein Verfahren zur Steuerung der Anordnung gemäss dem Oberbegriff des Anspruchs 16.

### Stand der Technik

Damit eine in einer gattungsgemässen Anordnung eingebundene Bearbeitungsmaschine, beispielsweise eine Fräsmaschine, unterschiedliche Werkstücke unterschiedlich bearbeiten kann, muss die Fräsmaschine auf unterschiedliche Bearbeitungswerkzeuge / Fräswerkzeuge (Fräser) zurückgreifen können. Der jeweiligen Fräsmaschine ist dazu üblicherweise ein Werkzeugspeicher zugeordnet, der mit unterschiedlichen Fräswerkzeugen bestückt ist. Moderne CNC-Fräsmaschinen verfügen über hydraulische Werkzeugspannsysteme, mit welchen ein automatischer Wechsel der Fräswerkzeuge ermöglicht wird. Bis anhin werden die Bearbeitungswerkzeuge dem der jeweiligen Bearbeitungsmaschine zugeordneten Speicher entweder manuell oder über ein Portalsystem zugeführt bzw. entnommen. Beiden Varianten haften Nachteile an. Das manuelle Zuführen/Entnehmen von Bearbeitungswerkzeugen zu der jeweiligen Bearbeitungsmaschine erfordert Manpower und ist entsprechend aufwendig und teuer. Da solche Bearbeitungsmaschinen zudem auch unbemannt und oft in mehreren Schichten in Betrieb sein sollen, kann der zugehörige Werkzeugspeicher für die benötigten Arbeitsgänge zu klein sein. In den unbemannten Schichten sollen jedoch auch den Anforderungen entsprechend einige bis mehrere bzw. viele Werkzeugwechsel möglich sein. Eine automatische Werkzeugbeladung des Werkzeugspeichers kann aber auch sinnvoll sein ohne Automation, um beispielsweise den Bediener zu entlasten oder Fehlbestückungen zu vermeiden.

Andererseits ist jedoch auch ein Portalsystem, welches einen automatischen Werkzeugwechsel grundsätzlich ermöglicht, mit Nachteilen verbunden, da es teuer und unflexibel ist und ausserdem viel Platz beansprucht.

Die WO 2016014917 A1 offenbart ein Lagersystem zum Ein- und Auslagern von Behältern. Das Lagersystem weist neben einem Hauptrechner 200 ein mobiles Lagergerät 100 in Form eines AGV's mit darauf angeordnetem Roboter 120 auf. Das AGV umfasst eine Batterie 190 zur Energieversorgung des Antriebs wie auch des Roboters. Zudem ist ein Zwischenspeicher in Form eines Behälters 145 auf dem AGV angeordnet. Das AGV ist mit zumindest einem Sensor 110, 150 versehen, mittels welchen es sich innerhalb der Lageranlage anhand von Markierungen orientieren und positionieren kann. Ein weiterer Sensor soll dem Erkennen, Identifizieren und Lokalisieren von ein- oder auszulagernden Gütern dienen.

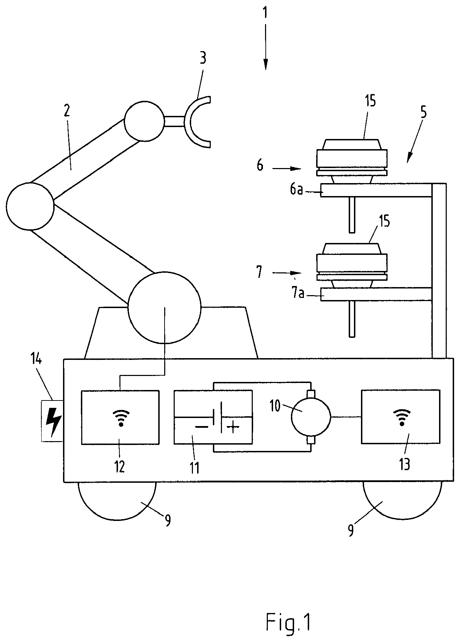

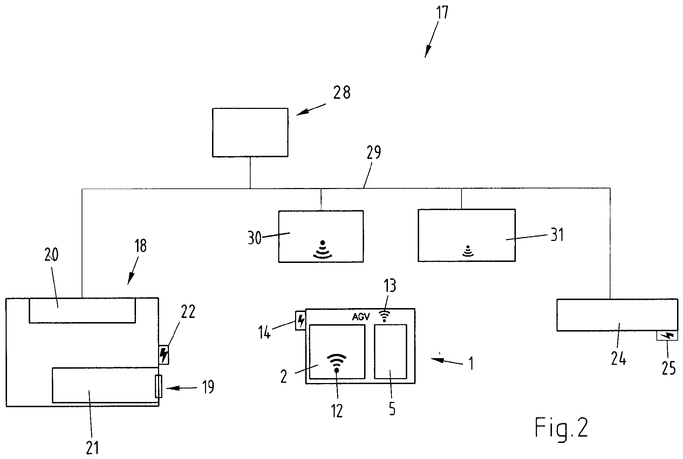

Aus der CN208013770U ist ein Werkzeug-Transportsystem bekannt, welches gemäss Fig. 1 eine numerisch gesteuerte Werkzeugmaschine 1, zwei stationär angeordnete 6-Achsenrobter 2, eine Ladestation 3, eine Belade- und Entladestation 4 für Werkzeuge, eine Haupt-Steuerungseinrichtung 5 und eine ringförmige Führungslinie 6 umfasst. Fig. 2 zeigt einen zweidimensionalen Datensammler 7, eine zweidimensionale Codeanzeige 8, einen Werkzeugträger 9, einen AGV-Werkzeugschlitten 10 und einen Haltebügel 11.

Schliesslich offenbart die CN106826784A einen fahrerlosen Untersatz, der mit einem pneumatischen Greifer versehen ist.

Aufgabe der Erfindung ist es, eine dem eingangs genannten technischen Gebiet zugehörende Anordnung zur Bearbeitung von Werkstücken zu schaffen, welche ein vollautomatisches Zuführen von Bearbeitungswerkzeugen zu einem der jeweiligen Bearbeitungsmaschine zugeordneten Speicher und/oder eine vollautomatische Entnahme aus einem der jeweiligen Bearbeitungsmaschine zugeordneten Speicher ermöglicht, wobei die Anordnung flexibel und universell einsetzbar sein.

Die Lösung der Aufgabe ist durch die Merkmale des Anspruchs 1 definiert. Gemäss der Erfindung umfasst die Anordnung zumindest eine Bearbeitungsmaschine und einen der jeweiligen Bearbeitungsmaschine zugeordneten Maschinenspeicher zur Aufnahme von Bearbeitungswerkzeugen, sowie einen auf einem fahrerlosen Untersatz angeordneten Roboter, mittels welchem Bearbeitungswerkzeuge dem Maschinenspeicher zugeführt und/oder daraus entnommen werden können, wobei die Anordnung zudem einen zentralen Werkzeugspeicher für Bearbeitungswerkzeuge umfasst, welcher derart angeordnet ist, dass der Roboter des fahrerlosen Untersatzes diesem Bearbeitungswerkzeuge entnehmen und/oder übergeben kann und dass der fahrerlose Untersatz mit einem Zwischenspeicher zur Aufnahme von Bearbeitungswerkzeugen versehen ist

Durch das Vorsehen eines zentralen Werkzeugspeichers wird ein Werkzeuglager geschaffen, welchem der Roboter des fahrerlosen Untersatzes Bearbeitungswerkzeuge vollautomatisch entnehmen und auch wieder übergeben kann, was im Hinblick auf einen vollautomatischen Betrieb der Anlage von Vorteil ist, zumal ein zentraler Werkzeugspeicher eine grosse Anzahl an unterschiedlichen Bearbeitungswerkzeugen aufnehmen kann, so dass die mit dem fahrerlosen Untersatz zurückzulegenden Wegstrecken optimiert bzw. minimiert werden können und ausserdem kann die für einen Werkzeugwechsel benötigte Zeit reduziert werden. Zudem können neue Maschinen einfach hinzugefügt werden und die Bearbeitungswerkzeuge können auf verschiedenen Bearbeitungsmaschinen verwendet werden. Es entstehen auch keine Probleme in Bezug auf den Platzbedarf, insbesondere in Bezug auf die benötigten Hallenhöhen. Zudem kann ein Werkzeugwechsel an der Bearbeitungsmaschine ohne manuelles Zutun erfolgen, was insbesondere bei einem Schichtbetrieb Vorteile mit sich bringt.

Bei einer besonders bevorzugten Weiterbildung ist der Zwischenspeicher des fahrerlosen Untersatzes zur Aufnahme von zumindest drei Bearbeitungswerkzeugen, insbesondere zur Aufnahme von zumindest zehn Bearbeitungswerkzeugen ausgebildet, wobei der Zwischenspeicher derart ausgebildet ist, dass das jeweilige Bearbeitungswerkzeug positionsdefiniert darin aufnehmbar ist.

Das Vorsehen eines Zwischenspeichers für zumindest drei Bearbeitungswerkzeuge ermöglicht beispielsweise, dass zwei unterschiedliche Bearbeitungswerkzeuge verfügbar sind und ein Platz frei bleibt, so dass beispielsweise ein Bearbeitungswerkzeug aus einer Maschine bzw. dem Maschinenspeicher entnommen werden kann, ohne dass ein Bearbeitungswerkzeug an die Maschine übergeben werden muss. Es versteht sich, dass mit einem grösseren Zwischenspeicher grundsätzlich auch die Flexibilität erhöht wird. Zudem ermöglicht ein solcher Zwischenspeicher, dass während des Umherfahrens des fahrerlosen Untersatzes kein Werkzeug mittels des Robotergreifers gehalten werden muss, so dass die Gefahr reduziert wird, Werkzeuge während des Bewegens des Untersatzes zu verlieren bzw. fallen zu lassen.

Vorzugsweise umfasst der Zwischenspeicher mehrere vertikal übereinander angeordnete Ebenen zur Aufnahme der Bearbeitungswerkzeugen, wobei in jeder Ebene horizontal verlaufende Leisten angeordnet sind, welche mit mechanisch ausgebildeten Positionierhilfen für die Bearbeitungswerkzeuge versehen sind. Horizontal verlaufende Leisten stellen eine einfache Möglichkeit dar, um den Zwischenspeicher auf mehrere Ebenen aufzuteilen, was in Bezug auf die Speichergrösse und den Platzbedarf vorteilhaft ist, wobei die mechanischen Positionierhilfen helfen, das jeweilige Bearbeitungswerkzeug positionsdefiniert in dem Zwischenspeicher abzulegen. Ausserdem sollen die mechanischen Positionierhilfen sicherstellen, dass das jeweilige Bearbeitungswerkzeug während des Bewegens des fahrerlosen Untersatzes die Position und Ausrichtung im Zwischenspeicher beibehält.

Bei einer besonders bevorzugten Weiterbildung ist der fahrerlose Untersatz mit einer elektromechanischen Schnittstelle versehen, mittels welcher er derart an eine Andockstelle andockbar ist, dass er positioniert und/oder mit Energie versorgt wird. Eine elektromechanische Schnittstelle ermöglicht sowohl ein positionsgenaues Andocken des fahrerlosen Untersatzes wie auch eine elektrische Kopplung zur Energieversorgung von elektrischen Komponenten.

Vorzugsweise ist der fahrerlose Untersatz elektrisch angetrieben und mit zumindest einem Akkumulator zur Energieversorgung des Antriebs und/oder des Roboters versehen, wobei der Akkumulator an einer Andockstelle aufladbar ist. Ein derart ausgebildeter Untersatz ist vergleichsweise einfach aufgebaut und kostengünstig in der Herstellung.

Besonders bevorzugt sind die Bearbeitungsmaschine und/oder der zentrale Werkzeugspeicher mit einer Andockstelle versehen. Das Vorsehen einer Andockstelle an der jeweiligen Maschine bzw. Vorrichtung ermöglicht beispielsweise, dass der Akkumulator während der Übergabe bzw. Entnahme eines Werkzeugs geladen wird. Sofern der Roboter nicht von einem auf dem fahrerlosen Untersatz angeordneten Akkumulator gespeist wird, kann dieser über die Andockstelle mit elektrischer Energie versorgt werden.

Vorzugsweise weist die Anordnung Mittel auf, mittels welchen nach dem Andocken des fahrerlosen Untersatzes die Ist-Position des fahrerlosen Untersatzes und/oder des Roboters gegenüber der Bearbeitungsmaschine und/oder dem zentralen Werkzeugspeicher erkennbar ist. Dadurch braucht der fahrerlose Untersatz für Übergabe bzw. Entnahme eines Werkzeugs in Bezug auf die jeweilige Maschine bzw. Vorrichtung nicht sehr genau positioniert zu werden, sondern es kann beispielsweise genügen, den fahrerlosen Untersatz mit einer Genauigkeit von ca. +/- 10mm bis +/-30mm an der Bearbeitungsmaschine bzw. dem zentralen Werkzeugsspeicher zu positionieren. Danach kalibriert sich der Roboter mit der für eine Übergabe bzw. Entnahme eines Werkzeugs benötigten Genauigkeit gegenüber der Maschine bzw. Vorrichtung.

Bevorzugt ist der auf dem fahrerlosen Untersatz angeordnete Roboter elektrisch angetrieben, wobei der Roboter von einem auf dem fahrerlosen Untersatz angeordneten Akkumulator gespeist und/oder an einer Andockstelle mit elektrischer Energie versorgt wird. Elektrisch angetriebene Roboter sind in verschiedensten Ausführungen verfügbar, so dass der fahrerlose Untersatz einsatzspezifisch mit dem passenden Roboter bestückt werden kann.

Vorzugsweise ist der Roboter zumindest 4-achsig, insbesondere zumindest 6-achsig ausgebildet. Derartige Roboter sind flexibel in der Anwendung und günstig in der Anschaffung.

Besonders bevorzugt weist der Roboter einen pneumatisch angetriebenen Greifer auf, wobei der fahrerlose Untersatz mit einem Druckluftspeicher zum Betätigen des Greifers versehen ist oder der fahrerlose Untersatz beim Andocken an eine Andockstelle mit einer Druckluftquelle zum Betätigen des Greifers verbunden wird. Pneumatisch angetriebene Greifer haben sich für viele Anwendungsfälle als Standard etabliert, da sie in verschiedensten Varianten erhältlich sind. Sofern die Werkzeuge während des Transports im Zwischenspeicher aufgenommen werden können, muss der Greifer während des Bewegens des fahrerlosen Untersatzes nicht mit Druckluft beaufschlagt werden.

Eine weitere, bevorzugte Weiterbildung der Anordnung sieht vor, dass der Maschinenspeicher der Bearbeitungsmaschine mit einer verschliessbaren Beladeöffnung versehen ist, über welche der Roboter der Bearbeitungsmaschine Bearbeitungswerkzeuge zuführen und/oder entnehmen kann. Durch eine verschliessbare Beladeöffnung kann verhindert werden, dass während des Bearbeitens von Werkstücken beispielsweise Kühlwasser und Späne austreten. Eine verschliessbare Beladeöffnung kann zudem derart gesteuert werden, dass das Öffnen und Schliessen durch den Roboter ausgelöst wird oder automatisch durch das Andocken bzw. Abkoppeln des fahrerlosen Untersatzes erfolgen kann.

Vorzugsweise weist die Anordnung ein Leitsystem zur Ansteuerung des fahrerlosen Untersatzes wie auch des Roboters auf, wobei sowohl der fahrerlose Untersatz wie auch der Roboter drahtlos über das Leitsystem ansteuerbar. Damit lassen sich die beiden Geräte individuell ansteuern und es wird ein besonders flexibler Einsatz des fahrerlosen Untersatzes zusammen mit dem Roboter ermöglicht.

Eine weitere Aufgabe der Erfindung besteht darin, einen fahrerlosen Untersatz für eine gemäss einem der Ansprüche 1 bis 12 ausgebildete Anordnung zu schaffen, welcher flexibel in der Anwendung ist und sich in besonders bevorzugter Weise für eine effiziente und vollautomatisierte Werkzeugbeladungvon Bearbeitungsmaschinen eignet.

Diese Aufgabe wird mit einem fahrerlosen Untersatz gelöst, der mit einem Zwischenspeicher zur Aufnahme von Werkzeugen versehen ist, wobei auf dem Untersatz ein Roboter angeordnet ist, mittels welchem Werkzeuge dem Zwischenspeicher zugeführt und/oder daraus entnommen werden können. Durch das Vorsehen eines derartigen Zwischenspeichers kann die Anzahl der Fahrten wie auch der zurückzulegenden Wegstrecke des fahrerlosen Untersatzes optimiert bzw. minimiert werden. Da die Werkzeuge während des Bewegens des fahrerlosen Untersatzes in dem Zwischenspeicher abgelegt werden können, wird die Gefahr gebannt, dass in dem Greifer gehaltene Werkzeuge fallen gelassen werden.

Eine besonders bevorzugte Weiterbildung des fahrerlosen Untersatzes ist in dem abhängigen Anspruch 14 beschrieben. Gemäss diesem Anspruch ist der fahrerlose Untersatz elektrisch angetrieben und mit einem Akkumulator zur Speisung des Antriebs und/oder des Roboters versehen, wobei der fahrerlose Untersatz schienenungebunden verkehren kann.

Diese Ausbildung ermöglicht einen besonders flexiblen Einsatz des fahrerlosen Untersatzes. Zudem müssen keine herkömmlichen Schienen im Sinne von mechanischen Führungsmitteln vorgesehen werden, sondern der fahrerlose Untersatz kann beispielsweise einer optischen oder induktiven Spur folgen, was insbesondere im Hinblick auf eine mögliche Erweiterung/Veränderung wie auch in Bezug auf die Kosten und den beanspruchten Platz vorteilhaft ist. Ausserdem kann das Einsatzgebiet des fahrerlosen Untersatzes einfach und schnell an sich verändernde Rahmenbedingungen angepasst werden, wenn beispielsweise eine zusätzliche Bearbeitungsmaschine damit bestückt werden soll.

Eine besonders vorteilhafte Ausbildung des fahrerlosen Untersatzes sieht vor, dass dieser mit separaten Empfängern für den elektrischen Antrieb und den Roboter versehen ist. Durch das Vorsehen von zwei unabhängigen Empfängern lassen sich die beiden Geräte -fahrerloser Untersatz bzw. Roboter- individuell und unabhängig voneinander ansteuern. Zudem ist insbesondere der logistische Aufwand von zwei unabhängigen Empfängern im Vergleich mit nur einem Empfänger, welcher die empfangenen Befehle interpretieren und dem jeweiligen Gerät zuordnen muss, vergleichsweise gering.

Schliesslich besteht eine weitere Aufgabe der Erfindung darin, ein Verfahren zur Steuerung einer nach einem der Ansprüche 1 bis 12 ausgebildeten Anordnung zur Bearbeitung von Werkstücken vorzuschlagen, welches eine besonders effiziente Bestückung von Bearbeitungsmaschinen mit Bearbeitungswerkzeugen ermöglicht.

Gemäss dem Anspruch 16 besteht die Lösung dieser Aufgabe darin, dass der Bearbeitungsmaschine mittels des auf dem fahrerlosen Untersatzes angeordneten Roboters Werkzeuge zugeführt werden, wobei die Werkzeuge mittels des Roboters dem zentralen Werkzeugspeicher entnommen, danach auf dem fahrerlosen Untersatz zwischengelagert und anschliessend der Bearbeitungsmaschine übergeben werden. Dieses Verfahren zusammen mit dem fahrerlosen Untersatz eignet sich zum schnellen und vollautomatischen Bestücken von einem oder mehreren Maschinenspeichern von Bearbeitungsmaschinen.

Anspruch 17 beschreibt ein besonders bevorzugtes Verfahren zur Steuerung der Anordnung. Dazu wird der fahrerlose Untersatz für die Übergabe oder Entnahme eines Werkzeugs mittels eines Leitsystems zu der Bearbeitungsmaschine hin bewegt und dort vorpositioniert, wobei der fahrerlose Untersatz danach entweder mechanisch feinpositioniert wird oder die Abweichung zwischen der Ist- und einer Sollposition ermittelt und rechnerisch bei der Übergabe oder Entnahme von Werkzeugen berücksichtigt wird. Beide Varianten ermöglichen den Roboter in Bezug auf die Bearbeitungsmaschine derart genau auszurichten und zu bewegen, dass eine Übergabe bzw. Entnahme von Bearbeitungswerkzeugen von einer definierten Position bzw. an eine definierte Position mittels des Robotergreifers ermöglicht wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Nachfolgend wird die Erfindung anhand von Zeichnungen näher erläutert. Dabei zeigt:
- Fig. 1: eine schematische Darstellung eines fahrerlosen Untersatzes mit einem darauf angeordneten Roboter,
- Fig. 2: in schematischer Darstellung eine erfindungsgemäss ausgestaltete Anordnung, welche einen gemäss Fig. 1 ausgebildeten fahrerlosen Untersatz umfasst.

Grundsätzlich sind in den Figuren gleiche Teile mit gleichen Bezugszeichen versehen.

### Wege zur Ausführung der Erfindung

Die Figur 1 zeigt in schematischer Darstellung einen fahrerlosen Untersatz 1, der im Fachjargon insbesondere auch als AGV (automated guided vehicle) bezeichnet wird. Auf diesem Untersatz 1 ist ein Roboter 2 zusammen mit einer als Zwischenspeicher 5 dienenden Ablage angeordnet. Der Zwischenspeicher 5 ist im vorliegenden Beispiel als Werkzeugspeicher zur Aufnahme von Bearbeitungswerkzeugen 15 ausgebildet. Je nach Anwendung kann der Zwischenspeicher 5 zur Aufnahme von einigen wenigen Werkzeugen bis zu mehreren Dutzend Werkzeugen ausgebildet sein. In der vorliegenden Darstellung weist der Zwischenspeicher 5 zwei vertikal übereinander angeordnete Ebenen 6, 7 auf, wobei in jeder Ebene 6, 7 mehrere Bearbeitungswerkzeuge 15 aufgenommen werden können. Der Zwischenspeicher 5 ist derart ausgebildet, dass das jeweilige Bearbeitungswerkzeug 15 positionsdefiniert darin abgelegt werden kann. Dazu ist der Zwischenspeicher 5 vorzugsweise mit Erhebungen und/oder Vertiefungen und/oder Bohrungen und/oder Schlitzen und/oder Ausnehmungen (alle nicht dargestellt) versehen, welche als mechanische Positionierhilfe bei der Ablage und/oder Entnahme von Bearbeitungswerkzeugen 15 in den Zwischenspeicher 5 dienen. In jeder Ebene 6, 7 sind horizontal verlaufende Leisten 6a, 7a angeordnet. In diese Leisten 6a, 7a oder an diesen Leisten 6a, 7a können die genannten mechanischen Positionierhilfen angebracht werden. Obwohl im vorliegenden Beispiel nur zwei Ebenen 6, 7, und zwei Leisten 6a, 7a dargestellt sind, können natürlich weitaus mehr Ebenen mit einer entsprechenden Anzahl Leisten vorgesehen werden. So können beispielsweise drei, vier, fünf oder sechs Ebenen vorgesehen werden, wobei in jeder Ebene drei bis zehn Bearbeitungswerkzeuge aufgenommen werden können, so dass insgesamt zwischen 9 und 60 Werkzeuge in dem Zwischenspeicher 5 aufgenommen werden können. Der fahrerlose Untersatz 1 besitzt vier Räder 9 und einen Antrieb 10, der von einem Akkumulator 11 gespeist wird. Zudem ist der fahrerlose Untersatz 1 mit zwei elektronischen Einrichtungen 12, 13 versehen, welche insbesondere je eine Sende- und Empfangsvorrichtung sowie eine Steuervorrichtung umfassen. Die beiden elektronischen Einrichtungen 12, 13 werden vorzugsweise auch von dem Akkumulator 11 mit Energie versorgt. Der Einfachheit halber werden die elektronischen Einrichtungen 12, 13 nachfolgend teilweise auch als Empfänger 12, 13 bezeichnet. Die erste elektronische Einrichtungen 12 dient der Steuerung des Roboters 2, während die zweite elektronische Einrichtung 13 der Steuerung des Antriebs 10 dient. Durch das Vorsehen von zwei unabhängigen Empfängern 12, 13 lassen sich die beiden Geräte -fahrerloser Untersatz 1 bzw. Roboter 2- individuell ansteuern. Zudem ist insbesondere der logistische Aufwand von zwei unabhängigen Empfängern 12, 13 im Vergleich mit nur einem Empfänger, welcher die empfangenen Befehle interpretieren und dem jeweiligen Gerät zuordnen muss, vergleichsweise gering.

Der fahrerlose Untersatz 1 weist zudem eine elektromechanische Schnittstelle 14 auf, welche wiederum nur schematisch angedeutet ist und mittels welcher der fahrerlose Untersatz 1 an einer Andockstelle angedockt werden kann. Die elektromechanische Schnittstelle 14 stellt sicher, dass der fahrerlose Untersatz 1 beim Andocken an die Andockstelle einerseits positioniert und andererseits mit Energie versorgt wird, wie nachfolgend noch näher erläutert wird.

Der auf dem fahrerlosen Untersatz angeordnete und ebenfalls stark vereinfacht dargestellte Roboter 2 verfügt über zumindest 4, insbesondere zumindest 6 Bewegungsachsen. Die Bewegungsachsen des Roboters 2 sind elektromotorisch angetrieben, während ein dem Erfassen/Halten der Bearbeitungswerkzeuge 15 dienender Greifer 3 pneumatisch betätigt wird, wobei natürlich auch ein elektromotorisch betätigter Greifer zum Einsatz kommen kann. Die Speisung des Roboters 2 erfolgt im vorliegenden Beispiel nicht über den Akkumulator 11 des fahrerlosen Untersatzes 2, sondern über die elektromechanische Schnittstelle 14. Über diese elektromechanische Schnittstelle 14 kann der Roboter 2 im angedockten Zustand von extern gespeist werden, wie nachfolgend noch erläutert wird. Mit dem Roboter 2 können die genannten Bearbeitungswerkzeuge 15 an eine Bearbeitungsmaschine übergeben bzw. daraus entnommen werden, was nachfolgend ebenfalls noch näher erläutert wird.

Die Figur 2 zeigt in schematischer Darstellung eine erfindungsgemäss ausgestaltete Anordnung 17. Die Anordnung 17 umfasst neben dem vorgängig genannten fahrerlosen Untersatz 1 eine Bearbeitungsmaschine 18, einen zentralen, stationär angeordneten Werkzeugspeicher 24 und ein Leitsystem 28. Das Leitsystem 28 ist zusammen mit der Bearbeitungsmaschine 18, dem fahrerlosen Untersatz 1 und dem zentralen Werkzeugspeicher 24 in ein Netzwerk eingebunden, wobei die Bearbeitungsmaschine 18 und der Werkzeugspeicher 24 kabelgebunden integriert sind, während der fahrerlose Untersatz 1 wie auch der Roboter 2 mittels einer drahtlosen Datenübertragung - Schnittstelle- integriert sind. Vorzugsweise umfasst das Leitsystem 28 zwei drahtlose Sende- und Empfangseinheiten 30, 31. Die erste Sende- und Empfangseinheit 30 dient der Steuerung des fahrerlosen Untersatzes 1, während die zweite Sende- und Empfangseinheit 31 der Steuerung des Roboters 2 dient. Eine jeweils unabhängige Steuerung des fahrerlosen Untersatzes 1 und des Roboters 2 bringt in Bezug auf die Programmierung und Komplexität bzw. Einfachheit des Systems Vorteile mit sich. Zur Vereinfachung und zur Abgrenzung gegenüber den auf dem fahrerlosen Untersatz 1 angeordneten Empfängern 12, 13 werden die Sende- und Empfangsgeinheiten 30, 31 des Leitsystems 28 nachfolgend auch als Sender 30, 31 bezeichnet.

Die Bearbeitungsmaschine 18 besitzt eine elektronische Steuerung 20, welche schematisch in der Form eines Blocks dargestellt ist. Zudem ist die Bearbeitungsmaschine 18 mit einem Werkzeugspeicher, nachfolgend insbesondere Maschinenspeicher 21 genannt, versehen. Der Maschinenspeicher 21 kann in die Maschine 18 integriert oder der Maschine 18 zugeordnet sein. Die Bearbeitungsmaschine 18 verfügt über ein Werkzeugspannsystem, mittels welchem ein automatischer Wechsel der Bearbeitungswerkzeuge ermöglicht wird, indem damit Bearbeitungswerkzeuge aus dem Maschinenspeicher 21 entnommen und diesem auch wieder zugeführt werden können.

Des Weiteren umfasst die Anordnung 17 den zentralen Werkzeugspeicher 24, der mit einer Vielzahl von Bearbeitungswerkzeugen bestückt werden kann. Ein solcher Werkzeugspeicher 24 kann beispielsweise zwischen ca. 30 und 300 Bearbeitungswerkzeuge aufnehmen. Mittels des fahrerlosen Untersatzes 1 können Bearbeitungswerkzeuge zwischen dem zentralen Werkzeugspeicher 24 und der Bearbeitungsmaschine 18 bzw. deren Maschinenspeicher 21 ausgetauscht werden. Jedenfalls kann der auf dem fahrerlosen Untersatz 1 angeordnete Roboter 2 einerseits Bearbeitungswerkzeuge aus dem zentralen Werkzeugspeicher 24 entnehmen und der Bearbeitungsmaschine 18 bzw. deren Maschinenspeicher 21 zuführen und andererseits kann der Roboter 2 Bearbeitungswerkzeuge der Bearbeitungsmaschine 18 bzw. deren Maschinenspeicher 21 entnehmen und dem zentralen Werkzeugspeicher 24 zuführen. Da der fahrerlose Untersatz 1 über einen Zwischenspeicher 5 verfügt, kann eine bestimmte Anzahl an Bearbeitungswerkzeugen auf dem Untersatz 1 zwischengespeichert werden. Vorzugsweise werden die Bearbeitungswerkzeuge während des Transports, also während des Bewegens des fahrerlosen Untersatzes 1, in dem Zwischenspeicher 5 abgelegt. Dies bringt einerseits den Vorteil mit sich, dass der Roboter 2 bzw. dessen Greifer 3 kein Bearbeitungswerkzeug während des Transports aktiv halten muss, was insbesondere bei pneumatischen Greifern ein Problem sein könnte. Zudem kann die Anzahl der Fahrten des fahrerlosen Untersatzes 1 optimiert bzw. reduziert werden, da in dem Zwischenspeicher 5 eine bestimmte Anzahl an Bearbeitungswerkzeugen aufgenommen werden kann. Daher muss der fahrerlose Untersatz 1 nicht für jeden Werkzeugwechsel das gewünschte Bearbeitungswerkzeug aus dem zentralen Werkzeugspeicher 24 holen und auch ein der Bearbeitungsmaschine 18 entnommenes Werkzeug muss nicht jedes Mal dem zentralen Werkzeugspeicher 24 zugeführt werden. Über eine intelligente Logik kann gesteuert werden, welche Werkzeuge in dem Zwischenspeicher 5 des fahrerlosen Untersatzes 1 zwischengelagert werden sollen und welche nicht, wobei vorzugsweise zumindest immer ein Speicherplatz in dem Zwischenspeicher 5 leer bleibt, damit ein der Bearbeitungsmaschine 18 entnommenes Werkzeug darin aufgenommen werden kann. Vorzugsweise bleiben mehrere Speicherplätze frei, damit ggf. mehrere Bearbeitungswerkzeuge dem Maschinenspeicher 21 entnommen werden können, ohne dass diese zwingend in den zentralen Werkzeugspeicher 24 überführt werden müssen oder dass neue Bearbeitungswerkzeuge der Maschine im Austausch übergeben werden müssen. Vorzugsweise wird die Verwaltung der in dem fahrerlosen Untersatz 1 aufgenommenen Bearbeitungswerkzeuge über eine definierte Platzzuordnung vorgenommen.

Der Begriff "zentral" in Bezug auf den Werkzeugspeicher ist derart zu verstehen, dass der Werkzeugspeicher für den fahrerlosen Untersatz 1 leicht zugänglich ist und die zurückzulegenden Fahrstrecken möglichst optimiert werden, so dass zentral nicht mit im Zentrum gelegen gleichzusetzen ist, sondern vielmehr gut oder leicht zugänglich bedeutet.

Sowohl der fahrerlose Untersatz 1 wie auch die Bearbeitungsmaschine 18 und der zentrale Werkzeugspeicher 24 sind mit je einer elektromechanischen Schnittstelle 14, 22, 26 versehen, wobei die elektromechanische Schnittstelle 14 des fahrerlosen Untersatzes 1 mit denjenigen der Bearbeitungsmaschine 18 und des zentralen Werkzeugspeichers 24 derart kompatibel ist, dass damit der fahrerlose Untersatz 1 sowohl an der Bearbeitungsmaschine 18 wie auch an dem zentralen Werkzeugspeicher 24 angedockt werden kann. Die genannten Schnittstellen an der Bearbeitungsmaschine 18 und an dem zentralen Werkzeugspeicher 24 dienen somit als Andockstelle 22, 25 zum Andocken des fahrerlosen Untersatzes 1. Letzterer kann durch das Andocken an die jeweiligen Andockstelle 22, 25 einerseits positioniert, d.h. in Relation zu der Bearbeitungsmaschine 18 bzw. dem zentralen Werkzeugspeicher 24 ausgerichtet werden. Andererseits wird der fahrerlose Untersatz 1 wie auch der Roboter 2 an der jeweiligen Andockstelle 22, 25 mit Energie versorgt. Im vorliegenden Beispiel wird im angedockten Zustand der Akkumulator 11 (Fig. 1) des fahrerlosen Untersatzes 1 geladen, während der Roboter 2 direkt an die Stromversorgung angeschlossen und dadurch mit elektrischer Energie versorgt wird. Zudem wird der Roboter 2 bzw. dessen pneumatisch angetriebener Greifer 3 über die Andockstelle mit Druckluft versorgt, indem die Schnittstelle 14 des fahrerlosen Untersatzes 1 pneumatisch mit einer Druckquelle verbunden wird. Die jeweilige Andockstelle 22, 25 ist vorzugsweise an das Stromnetz und an eine Druckluftquelle angeschlossen.

Die Funktionsweise der Anordnung wird nachfolgend anhand eines Beispiels erläutert, wobei auf beide Figuren Bezug genommen wird: An das Leitsystem 28 werden die innerhalb eines bestimmten Zeitraums zu bearbeitenden Aufträge übermittelt. Auf Grund von Prioritäten, Terminen, Stückzahlen etc. prüft nun das mit der Bearbeitungsmaschine 18 über das Netzwerk verbundene Leitsystem 28, welcher Auftrag als nächstes zu fertigen ist. Zudem erfasst das Leitsystem 28 den aktuellen Bestand an Bearbeitungswerkzeugen, welche im Maschinenspeicher 21 und ggf. im Spannfutter der Bearbeitungsmaschine 18 vorhanden/eingelagert sind. Der Werkzeugbestand kann über das Netzwerk aus der Maschinensteuerung 20 ausgelesen werden. Das Leitsystem 28 liest nun das nächste (oder die nächsten) Bearbeitungsprogramm(e) und extrahiert die benötigten Bearbeitungswerkzeuge. Danach vergleicht es die benötigten Werkzeuge mit denen, welche bereits im Maschinenspeicher 21 vorhandenen sind. Daraus entsteht eine Liste fehlender Werkzeuge. Gegebenenfalls wird auch eine Liste der nicht benötigten Werkzeuge erstellt.
Das Leitsystem 28 kommandiert nun den fahrerlosen Untersatz 1 zum zentralen Werkzeugspeicher 24, wo er an dessen Andockstelle 25 andockt. Danach kommandiert das Leitsystem 28 den Roboter 2, und ggf. auch den zentralen Werkzeugspeicher 24, die benötigten Werkzeuge vom zentralen Werkzeugspeicher 24 auf den Zwischenspeicher 5 des fahrerlosen Untersatzes 1 umzuladen. Sind nicht benötigte Werkzeuge der Bearbeitungsmaschine 18 zu entnehmen, bleibt ein entsprechender Teil des Zwischenspeichers 5 frei.

Danach kommandiert das Leitsystem 28 den fahrerlosen Untersatz 1 zu der Bearbeitungsmaschine 18, wo er an deren Andockstelle 22 andockt. Das Leitsystem 28 erteilt der Bearbeitungsmaschine 18 den Auftrag, ein nicht benötigtes Werkzeug zu der Beladeöffnung 19 zu transportieren. Die Bearbeitungsmaschine 18 öffnet die Beladeöffnung 19, wobei das Öffnen ggf. durch das Leitsystem 28 oder den Roboter 2 ausgelöst werden kann oder auch automatisch nach dem Andocken des fahrerlosen Untersatzes 1 erfolgen kann. Das Leitsystem 28 kommandiert danach den Roboter 2 das nicht benötigte Werkzeug zu entnehmen und auf einem freien Platz des Zwischenspeichers 5 abzulegen. Danach erhält der Roboter 2 den Befehl, ein benötigtes Werkzeug 15 aus dem Zwischenspeicher 5 in den Maschinenspeicher 21 der Bearbeitungsmaschine 18 zu laden. Das Leitsystem 28 registriert das entladene / beladene Werkzeug 15 korrekt bei der Maschinensteuerung 20, wobei insbesondere der Werkzeugtyp, dessen Abmessungen, Nullpunkt etc. erfasst und abgespeichert werden. Die Bearbeitungsmaschine 18 schliesst die Beladeöffnung 19, was entweder durch das Leitsystem 28 oder den Roboter 2 ausgelöst wird oder automatisch nach der Entnahme eines Werkzeugs aus dem Maschinenspeicher 21 erfolgen kann. Dieser Ablauf wiederholt sich, bis alle benötigten Werkzeuge von dem Zwischenspeicher 5 in den Maschinenspeicher 21 der Bearbeitungsmaschine 18 geladen sind und/oder bis alle nicht benötigten Werkzeuge aus dem Maschinenspeicher 21 entnommen und in den Zwischenspeicher 5 überführt sind.

Um den fahrerlosen Untersatz 1 zu entladen, wird dieser von dem Leitsystem 28 zu dem zentralen Werkzeugspeicher 24 beordert. Dort wird der Roboter 2 angewiesen, die nicht mehr benötigten Werkzeuge 15 vom Zwischenspeicher 5 des fahrerlosen Untersatzes 1 in den zentralen Werkzeugspeicher 24 zu entladen. Der vorgängig geschilderte Ablauf kann natürlich auch nur teilweise durchlaufen werden (zum Beispiel wenn keine Werkzeuge zu entladen sind) oder aber parallel mit mehreren fahrerlosen Untersätzen für eine oder mehrere Maschinen stattfinden.

Beispielsweise kann ein Befehl von der Leitsteuerung an den fahrerlosen Untersatz auch in der Form ablaufen, dass dem fahrerlosen Untersatz mitgeteilt wird, wohin er fahren muss und von welchem Platz ein Bearbeitungswerkzeug entnommen bzw. an welchen Platz ein Bearbeitungswerkzeug übergeben werden muss. Der Befehl an den fahrerlosen Untersatz kann beispielsweise folgendermassen lauten: fahre zu der Bearbeitungsmaschine, entnimm dort ein Werkzeug von Platz 3 im Zwischenspeicher und übergebe dieses an Platz 1 im Maschinenspeicher. Sinngemäss gilt dies natürlich auch für den Fall, dass ein Werkzeug von dem Platz x im Maschinenspeicher oder dem Platz y im zentralen Werkzeugspeicher entnommen und an den Platz z im Zwischenspeicher übergeben werden muss.

Damit der fahrerlose Untersatz 1 weiss, wie und wo er sich bewegen kann und darf, wird er auf sein Einsatzgebiet eingelernt und abgestimmt. Dazu wird eine Vermessung der Umgebung mittels am fahrerlosen Untersatz montierten Sensoren -insbesondere Flächenscanner- vorgenommen, wobei die Sensoren nicht dargestellt sind. Dabei fährt der fahrerlose Untersatz 1 die Umgebung zumindest einmal manuell ab, erfasst diese dabei und speichert die benötigten Daten intern oder extern auf dem Leistsystem 28 ab. Die Navigation erfolgt dann mit künstlicher Intelligenz ähnlichen Algorithmen. Anstelle von Flächenscannern kann auch eine sogenannte Lasernavigation zur Anwendung kommen. Dazu werden retroreflektierende Marken -Folien- an entsprechenden Stellen, beispielsweise Wänden und Säulen, angebracht und können von einem rotierenden Laserscanner auch über grössere Entfernungen genau vermessen werden. Für eine genaue Positionsbestimmung müssen für den Laserscanner mindestens 3 solcher Marken sichtbar sein. Aber auch eine konturenbasierte Navigation oder eine Navigation mittels im Boden angebrachter Magnetpunkte ist durchaus möglich.

Jedenfalls müssen für den fahrerlosen Untersatz keine herkömmlichen Schienen im Sinne von mechanischen Führungsmitteln vorgesehen werden. Anstelle des vorgängig angesprochenen Einlernens mittel Sensoren könnte beispielsweise auch eine optische oder induktive Spur vorgesehen werden, welcher der fahrerlose Untersatz folgen kann. Der Verzicht auf mechanische Führungsschienen ist insbesondere im Hinblick auf eine mögliche Erweiterung/Veränderung der Anordnung wie auch in Bezug auf damit verbundenen Kosten und den allenfalls beanspruchten Platz vorteilhaft.
Das Andocken des fahrerlosen Untersatzes 1 an die Andockstelle 22, 25 der Bearbeitungsmaschine 18 bzw. des zentralen Speichers 24 kann auf unterschiedliche Arten erfolgen. In einem ersten Beispiel positioniert sich der fahrerlose Untersatz 1 mit einer üblichen Genauigkeit von ca. +/- 10mm bis +/- 30mm an der Bearbeitungsmaschine 18 bzw. dem zentralen Werkzeugsspeicher 24. Danach wird die genaue Position des fahrerlosen Untersatzes 1 bzw. des Roboters 2 in Bezug auf die Maschine 18 bzw. den Werkzeugspeicher 24 anhand von an der Maschine 18 bzw. dem Werkzeugspeicher 24 angebrachten Referenzelementen (nicht dargestellt) ermittelt, was beispielsweise mittels am Untersatz 1 und/oder Roboter 2 angeordneten Sensoren erfolgen kann. Die ermittelte Soll-Ist-Abweichung kann nun dazu genutzt werden, um den Roboter 2 zu steuern. In einem weiteren Beispiel positioniert sich der fahrerlose Untersatz 1 wiederum mit der üblichen Genauigkeit von ca. +/- 10mm bis +/-30mm an der jeweiligen Andockstelle 22, 25. Danach wird der fahrerlose Untersatz 1 mittels eines mechanischen Positioniersystem eingezogen, zum Beispiel über einen Einlauf und ein Spannfutter und dabei mit der benötigten Genauigkeit von beispielsweise ca. +/- 3mm in Relation zu der Maschine 18 bzw. dem Werkzeugspeicher 24 positioniert.

Um eine Energie- und Signalübertragung von der stationären Andockstelle 22, 25 auf den fahrerlosen Untersatz 1 zu ermöglichen, kann die Schnittstelle eine Steckkupplung umfassen. Eine solche Steckkupplung kann ggf. auch über einen pneumatischen Anschluss verfügen.

Nachfolgend werden einige Vorteile der erfindungsgemäss ausgebildeten Anordnung aufgelistet:
- Im Gegensatz zu fest installierten Transfersystemen, welche meistens oberhalb der Maschinen angeordnet sind, können Bearbeitungsmaschinen durch das Vorsehen eines fahrerlosen, schienenungebundenen Untersatzes räumlich fast beliebig angeordnet werden;
- Neue Maschinen können einfach hinzugefügt werden durch Einlernen des fahrerlosen Untersatzes;
- Die Transportkapazität kann variabel erhöht werden durch Hinzufügen von weiteren fahrerlosen Untersätzen in den Verbund bzw. die Anordnung;
- Es entstehen keine Probleme mit den Hallenhöhen;
- Bearbeitungswerkzeuge können automatisch auf verschiedenen Bearbeitungsmaschinen verwendet werden;
- Das Vorsehen von zwei unabhängigen Sende- und Empfangseinheiten 30, 31 für die Steuerung des fahrerlosen Untersatzes 1 bzw. des Roboters 2 ermöglicht einen vergleichsweise einfachen Aufbau und eine einfache Programmierung der Sender und Empfänger.
- Anstelle von zwei unabhängigen Sende- und Empfangseinheiten kann sowohl auf der Seite des Leitsystems wie auch auf der Seite des fahrerlosen Untersatzes nur jeweils eine Sende- und Empfangseinheit vorgesehen werden. In diesem Fall ist auf der Empfängerseite eine Steuerung/Logik vorhanden, welche die empfangenen Befehle interpretiert und dem jeweiligen Gerät -Roboter bzw. fahrerloser Untersatz- zuordnet.

Obwohl vorgängig zumeist der allgemeine Begriff Werkzeugmaschinen verwendet wurde, sind unter diesem Begriff verschiedenste Arten von Bearbeitungsmaschinen wie beispielsweise Fräsmaschinen, Schleifmaschinen, Bohrmaschinen oder Drehmaschinen zu verstehen, wobei diese Aufzählung nicht abschliessend ist.

Das vorgängige Ausführungsbeispiel ist denn auch keineswegs als abschliessend zu betrachten, sondern im Rahmen der Erfindung sind durchaus davon abweichende Ausführungsformen möglich. Nachfolgend werden nicht abschliessend einige andere Varianten erwähnt:
- Der Roboter könnte auch oder ausschliesslich über den Akkumulator des Untersatzes mit Energie versorgt werden;
- Das Leitsystem könnte auf dem fahrerlosen Untersatz angeordnet werden;
- Der Roboter könnte mit einem elektrischen Greifer versehen werden;
- Der fahrerlose Untersatz könnte zusätzlich mit einer Aufnahme für Werkstücke versehen werden. Die Werkzeuge könnten ggf. mittels des Roboters einer Bearbeitungsmaschine zugeführt und auch wieder daraus entnommen werden;
- Das Aufladen des Akkumulators könnte induktiv erfolgen;
- Der auf dem fahrerlosen Untersatz angeordnete Akkumulator könnte derart dimensioniert werden, dass er den fahrerlosen Untersatz wie auch den Roboter über mehrere Stunden mit Energie versorgen kann. In einem solchen Fall könnte ggf. auf Andockstellen an der Bearbeitungsmaschine und/oder dem zentralen Werkzeugspeicher verzichtet werden und es könnte eine zentrale Ladestation, welche ggf. induktiv arbeitet, vorgesehen werden. Eine solche Lösung bietet sich insbesondere dann an, wenn auch der Greifer elektromotorisch betätigt wird, da in einem solchen Fall auch auf eine pneumatische Ankopplung verzichtet werden kann;
- Sofern der Roboter mit einem pneumatischen Greifer versehen ist, könnte auch ein Luftdruckspeicher auf dem fahrerlosen Untersatz vorgesehen werden. Um den Luftdruckspeicher aufzufüllen, könnte zudem eine mittels des Akkumulators gespeiste Druckluftpumpe (Kompressor) auf dem fahrerlosen Untersatz vorgesehen werden;
- Für den fahrerlosen Untersatz und den Roboter könnte eine gemeinsame Sende- und Empfangseinheit vorgesehen werden;
- Anstelle einer Verwaltung der in dem fahrerlosen Untersatz aufgenommenen Werkzeuge über eine Platzzuordnung könnte ein Lesegerät vorgesehen werden, mittels welchem das jeweilige Werkzeug identifiziert wird. Dazu müssten die Werkzeuge mit einer Identifikation, beispielsweise einem Chip oder einer optischen Marke, versehen werden;
- Sofern die Anordnung mehrere Bearbeitungsmaschinen umfasst, können auch zwei oder drei fahrerlose Untersätze vorgesehen werden. Es versteht sich, dass in einem solchen Fall die Leitsteuerung entsprechend angepasst werden muss. Ggf. könnte dann auch mehr als ein zentraler Werkzeugspeicher vorgesehen werden;
- Um den Roboter in Relation zu der Bearbeitungsmaschine bzw. dem zentralen Werkzeugspeicher auszurichten, könnten anstelle einer Feinpositionierung bzw. einer mechanischen Ankopplung auch Mittel vorgesehen werden, welche nach dem Grobpositionieren des fahrerlosen Untersatzes die Position des Robotes in Relation zu der Bearbeitungsmaschine bzw. dem zentralen Werkzeugspeicher erkennen. Die Robotersteuerung kann dann den möglichen Versatz gegenüber einer definieren Sollposition ausgleichen;
- Anstelle eines passiven zentralen Werkzeugspeichers könnte dieser auch aktiv ausgebildet sein, indem er über einen Handlingapparat -Roboter- verfügt und optional auch mit einer Werkzeugidentifikation versehen ist;
- Vorzugsweise wird das Öffnen der Beladeöffnung durch den fahrerlosen Untersatz oder den Roboter ausgelöst, insbesondere nachdem sich der fahrerlose Untersatz vor der jeweiligen Beladeöffnung positioniert hat und der Roboter für die Übergabe oder Entnahme eines Werkzeugs bereit ist;
- Anstelle eines einzigen Akkumulators könnte zumindest ein weiterer Akku auf dem fahrerlosen Untersatz vorgesehen werden, der insbesondere zur Speisung der beiden auf dem Untersatz angeordneten elektronischen Einrichtungen 12, 13 dienen würde.

## Patentansprüche

1. Anordnung (17) zur Bearbeitung von Werkstücken, mit zumindest einer Bearbeitungsmaschine (18) und einem der jeweiligen Bearbeitungsmaschine (18) zugeordneten Maschinenspeicher (21) zur Aufnahme von Bearbeitungswerkzeugen (15), sowie einen auf einem fahrerlosen Untersatz (1) angeordneten Roboter (2), mittels welchem Bearbeitungswerkzeuge (15) dem Maschinenspeicher (21) zugeführt und/oder daraus entnommen werden können. **dadurch gekennzeichnet, dass** die Anordnung einen zentralen Werkzeugspeicher (24) für Bearbeitungswerkzeuge (15) umfasst, welcher derart angeordnet ist, dass der Roboter (2) des fahrerlosen Untersatzes (1) diesem Bearbeitungswerkzeuge entnehmen und/oder übergeben kann und dass der fahrerlose Untersatz (1) mit einem Zwischenspeicher (5) zur Aufnahme von Bearbeitungswerkzeugen (15) versehen ist.

2. Anordnung (17) nach Anspruch 1, **dadurch gekennzeichnet, dass** der Zwischenspeicher (5) des fahrerlosen Untersatzes (1) zur Aufnahme von zumindest drei Bearbeitungswerkzeugen (15), insbesondere zur Aufnahme von zumindest zehn Bearbeitungswerkzeugen (15) ausgebildet ist, wobei der Zwischenspeicher (5) derart ausgebildet ist, dass das jeweilige Bearbeitungswerkzeug (15) positionsdefiniert darin aufnehmbar ist.

3. Anordnung (17) nach Anspruch 2, **dadurch gekennzeichnet, dass** der Zwischenspeicher (5) mehrere vertikal übereinander angeordnete Ebenen (6, 7) zur Aufnahme der Bearbeitungswerkzeugen (15) umfasst, wobei in jeder Ebene (6, 7) horizontal verlaufende Leisten (6a, 7a) angeordnet sind, welche mit mechanisch ausgebildeten Positionierhilfen für die Bearbeitungswerkzeuge (15) versehen sind.

4. Anordnung (17) nach einem der vorhergehenden Ansprüche, **dadurch gekennzeichnet, dass** der fahrerlose Untersatz (1) mit einer elektromechanischen Schnittstelle (14) versehen ist, mittels welcher er derart an eine Andockstelle (22, 25) andockbar ist, dass er positioniert und/oder mit Energie versorgt wird.

5. Anordnung (17) nach einem der vorhergehenden Ansprüche, **dadurch gekennzeichnet, dass** der fahrerlose Untersatz (1) elektrisch angetrieben und mit zumindest einem Akkumulator (11) zur Energieversorgung des Antriebs (10) und/oder des Roboters (2) versehen ist, wobei der Akkumulator (11) an einer Andockstelle (22, 25) aufladbar ist.

6. Anordnung (17) nach Anspruch 5, **dadurch gekennzeichnet, dass** die Bearbeitungsmaschine (18) und/oder der zentrale Werkzeugspeicher (24) mit einer Andockstelle (22, 25) versehen ist/sind.

7. Anordnung (17) nach Anspruch 6, **dadurch gekennzeichnet, dass** die Anordnung Mittel aufweist, mittels welchen nach dem Andocken des fahrerlosen Untersatzes (1) die Ist-Position des fahrerlosen Untersatzes (1) und/oder des Roboters (2) gegenüber der Bearbeitungsmaschine (18) und/oder dem zentralen Werkzeugspeicher (24) erkennbar ist.

8. Anordnung (17) nach einem der vorhergehenden Ansprüche, **dadurch gekennzeichnet, dass** der auf dem fahrerlosen Untersatz (1) angeordnete Roboter (2) elektrisch angetrieben ist, wobei der Roboter (2) von einem auf dem fahrerlosen Untersatz (1) angeordneten Akkumulator (11) gespeist und/oder an einer Andockstelle (22, 25) mit elektrischer Energie versorgt wird.

9. Anordnung (17) nach einem der vorhergehenden Ansprüche, **dadurch gekennzeichnet, dass** der Roboter (2) zumindest 4-achsig, insbesondere zumindest 6-achsig ausgebildet ist.

10. Anordnung (17) nach einem der vorhergehenden Ansprüche, **dadurch gekennzeichnet, dass** der Roboter (2) einen pneumatisch angetriebenen Greifer (3) aufweist, und dass der fahrerlose Untersatz (1) mit einem Druckluftspeicher zum Betätigen des Greifers (3) versehen ist oder dass der fahrerlose Untersatz (1) beim Andocken an eine Andockstelle (22, 25) mit einer Druckluftquelle zum Betätigen des Greifers (3) verbunden wird.

11. Anordnung (17) nach einem der vorhergehenden Ansprüche, **dadurch gekennzeichnet, dass** der Maschinenspeicher (21) der Bearbeitungsmaschine (18) mit einer verschliessbaren Beladeöffnung (19) versehen ist, über welche der Roboter (2) der Bearbeitungsmaschine (18) Bearbeitungswerkzeuge (15) zuführen und/oder entnehmen kann.

12. Anordnung (17) nach einem der vorhergehenden Ansprüche, **dadurch gekennzeichnet, dass** die Anordnung (17) ein Leitsystem (28) zur Ansteuerung des fahrerlosen Untersatzes (1) wie auch des Roboters (2) umfasst, wobei sowohl der fahrerlose Untersatz (1) wie auch der Roboter (2) drahtlos über das Leitsystem (28) ansteuerbar sind.

13. Fahrerloser Untersatz (1) für eine gemäss einem der Ansprüche 1 bis 12 ausgebildete Anordnung (17), wobei der fahrerlose Untersatz (1) zum Zuführen von Werkzeugen zu der Bearbeitungsmaschine (18) und/oder zur Entnahme von Werkzeugen von der Bearbeitungsmaschine (18) ausgebildet ist, **dadurch gekennzeichnet, dass** der fahrerlose Untersatz (1) mit einem Zwischenspeicher (5) zur Aufnahme von Werkzeugen (15) versehen ist und dass auf dem fahrerlosen Untersatz (1) ein Roboter (2) angeordnet ist, mittels welchem Werkzeuge (15) dem Zwischenspeicher (5) zugeführt und/oder daraus entnommen werden können.

14. Fahrerloser Untersatz (1) nach Anspruch 13, **dadurch gekennzeichnet, dass** der fahrerlose Untersatz (1) elektrisch angetrieben und mit einem Akkumulator (11) zur Speisung des Antriebs (10) und/oder des Roboters (2) versehen ist, und dass der fahrerlose Untersatz (1) derart ausgebildet ist, dass er schienenungebunden verkehren kann.

15. Fahrerloser Untersatz (1) nach Anspruch 14, **dadurch gekennzeichnet, dass** der fahrerlose Untersatz (1) mit separaten Empfängern für den elektrischen Antrieb (10) und den Roboter (2) versehen ist.

16. Verfahren zur Steuerung einer nach einem der Ansprüche 1 bis 12 ausgebildeten Anordnung (17) zur Bearbeitung von Werkstücken, wobei jede Bearbeitungsmaschine (18) mit einem Maschinenspeicher (21) versehen ist, **dadurch gekennzeichnet, dass** dem Maschinenspeicher (21) der Bearbeitungsmaschine (18) mittels des auf dem fahrerlosen Untersatz (1) angeordneten Roboters (2) Werkzeuge (15) zugeführt werden, indem die Werkzeuge (15) mittels des Roboters (2) dem zentralen Werkzeugspeicher (24) entnommen, danach auf dem fahrerlosen Untersatz (1) zwischengelagert und anschliessend dem Maschinenspeicher (21) der jeweiligen Bearbeitungsmaschine (18) übergeben werden.

17. Verfahren nach Anspruch 16, **dadurch gekennzeichnet, dass** der fahrerlose Untersatz (1) für die Übergabe oder Entnahme eines Werkzeugs (15) mittels eines Leitsystems (28) zu der Bearbeitungsmaschine (18) hin bewegt und dort vorpositioniert wird, dass der fahrerlose Untersatz (1) danach entweder mechanisch feinpositioniert wird oder die Abweichung zwischen der Ist- und einer Sollposition ermittelt und rechnerisch bei der Übergabe oder Entnahme von Werkzeugen mittels des Roboters (2) berücksichtigt wird.
